# EUROPEAN PATENT APPLICATION

(11) **EP 4 159 505 A1**
(43) Date of publication of application: **05.04.2023**
(21) Application number: 22194488.7
(22) Date of filing: 08.09.2022
(51) Int. Cl.: B60K 1/04, B62D 25/20

(54) **VEHICLE-BODY STRUCTURE**

(30) Priority: 30.09.2021 JP 2021161834; 10.11.2021 JP 2021183332
(71) Applicant: MAZDA MOTOR CORPORATION, Hiroshima 730-8670 (JP)
(72) Inventor: Inami, Takuma, Aki-gun, Hiroshima, 730-8670 (JP); Nakayama, Nobuyuki, Aki-gun, Hiroshima, 730-8670 (JP); Baba, Hiroyuki, Aki-gun, Hiroshima, 730-8670 (JP); Tanaka, Hiroshi, Aki-gun, Hiroshima, 730-8670 (JP)
(74) Representative: Frick, Robert

(57) **Abstract**

[Problem] It is possible to prevent a submarine phenomenon of a passenger at front collision and achieve vehicle floor-height lowering while maintaining a sufficient number of mounted batteries.

[Means for Solution] A vehicle-body structure includes a seat pan 48 that is formed at part of a floor panel 41 and on which a seat cushion RS1 is placed, and a battery RB arranged below the seat pan 48. A bulging portion 48a that bulges upward is formed at a vehicle front side of the seat pan 48. An accessory member RB1 is housed inside the bulging portion 48a. An upper end portion of the accessory member RB1 housed in the bulging portion 48a is positioned farther on the upper side than a lower end portion of the bulging portion 48a.

## Description

### [Technical Field]

The present disclosure relates to a vehicle-body structure provided in an automobile.

### [Background Art]

As disclosed in, for example, Patent Literature 1, a battery for supplying electric power to a traveling motor is mounted below a floor panel in an electric vehicle in some cases. A protruding portion that protrudes upward is formed at a vehicle rear portion of a battery cover of Patent Literature 1. The protruding portion is formed in such a hollow shape that a battery module is housed in a front-side part of the protruding portion and electric components such as a contactor and a fuse are housed in a rear-side part of the protruding portion.

### [Citation List]

### [Patent Literature]

[Patent Literature 1] WO 2013/084935

### [Summary of Invention]

### [Problems to be Solved by the Invention]

What is called a submarine phenomenon is known that, for example, when a passenger is relatively moved toward the front side by inertial force at front collision, the passenger moves obliquely downward toward the front side and leaves out of below a seat belt. To prevent the submarine phenomenon, it is needed that a seat cushion is higher on the vehicle front side than on the rear side and the floor panel as a rigid member below the seat cushion is formed in such a shape that a passenger does not move obliquely downward when a large load is applied, thereby preventing the passenger from leaving out of below a seat belt.

However, when the floor panel below the seat cushion is higher on the vehicle front side than on the rear side, the inside of this higher part is not used and is a wasted space when vehicle floor-height lowering is needed, in particular.

As for this point, although the protruding portion is formed at the battery cover of Patent Literature 1, only the battery module is housed in the front-side part of the protruding portion and the electric components are housed in the rear-side part of the protruding portion, which is not a configuration that can actively prevent the submarine phenomenon. Note that, as illustrated in FIG. 8 of Patent Literature 1, a shape like a bulging portion corresponding to the upper side of the battery module is provided at the front-side part of the protruding portion, but the inside of the shape is a hollow space and is not used as a part for housing members, components, and the like.

The present disclosure has been made in view of the above-described problem and has an objective to prevent a submarine phenomenon of a passenger at front collision and achieve vehicle floor-height lowering while maintaining a sufficient number of mounted batteries.

### [Means for Solving the Problems]

To achieve the above-described objective, in a first aspect of the present disclosure, a vehicle-body structure of an automobile includes a seat pan that is formed at a part of a floor panel and on which a seat cushion is placed, and a battery arranged below the seat pan. A bulging portion that bulges farther on an upper side than at a vehicle rear side of the seat pan is formed at a vehicle front side of the seat pan. An accessory member is housed inside the bulging portion. An upper end portion of the accessory member housed in the bulging portion is positioned farther on the upper side than a lower end portion of the bulging portion.

With this configuration, since the battery is arranged below the seat pan, a sufficient number of mounted batteries can be maintained. Moreover, since the bulging portion of the seat pan is formed at the vehicle front side of the seat pan, a passenger is unlikely to move obliquely downward toward the front side at front collision, and a submarine phenomenon is prevented. In addition, since the upper end portion of the accessory member housed in the bulging portion is positioned farther on the upper side than the lower end portion of the bulging portion, the inside of the bulging portion can be effectively utilized as a housing space for the accessory member, thereby achieving vehicle floor-height lowering.

In a second aspect of the present disclosure, a recessed portion having a bottom surface on which feet of a passenger sitting on the seat cushion can be placed is formed on the vehicle front side of the seat pan at the floor panel, and the bottom surface is positioned farther on a lower side than an upper end portion of the battery.

With this configuration, the feet of a passenger sitting on the seat cushion can be placed on the bottom surface of the recessed portion, which leads to a larger foot space and improves comfortability.

In a third aspect of the present disclosure, a tilted portion that is tilted such that the tilted portion is positioned farther on the upper side at a position farther on the a vehicle front side and on which the feet of the passenger sitting on the seat cushion can be placed is formed on a vehicle front side of the bottom surface.

With this configuration, the feet of a passenger sitting on the seat cushion can be placed on the tilted portion, and thus the submarine phenomenon is more unlikely to occur at front collision.

In a fourth aspect of the present disclosure, a dimension of the bulging portion in a vehicle front-rear direction is set such that the bulging portion is longer on a lower side than on an upper side, and a dimension of the accessory member in the vehicle front-rear direction is set such that the accessory member is longer on the lower side than on the upper side.

With this configuration, a longitudinal cross-section of the bulging portion is longer in the front-rear direction on the lower side than on the upper side, and thus seating comfortability of a seat cushion is excellent. In this case, since the dimension of the accessory member in the front-rear direction is set in accordance with the shape of the longitudinal cross-section of the bulging portion, a wasted space is unlikely to be generated inside the bulging portion, which leads to further floor-height lowering.

In a fifth aspect of the present disclosure, the bulging portion is continuously formed in a vehicle width direction.

With this configuration, since the inside of the bulging portion increases, for example, a plurality of accessory members or a large-sized accessory member can be housed, which leads to further floor-height lowering.

### [Advantageous Effects of Invention]

As described above, since a battery is arranged below a seat pan, an accessory member is housed inside a bulging portion formed at the vehicle front side of the seat pan, and an upper end portion of the accessory member is positioned farther on the upper side than a lower end portion of the bulging portion, it is possible to prevent a submarine phenomenon of a passenger at front collision and achieve vehicle floor-height lowering while maintaining a sufficient number of mounted batteries.

### [Brief Description of Drawings]

FIG. 1 is a side view of an automobile having a vehicle-body structure according to an embodiment of the present invention.
FIG. 2 is a perspective view illustrating a state in which the automobile is divided into an upper-portion structural body and a lower-portion structural body.
FIG. 3 is a perspective view of the vehicle-body structure when viewed from the upper side.

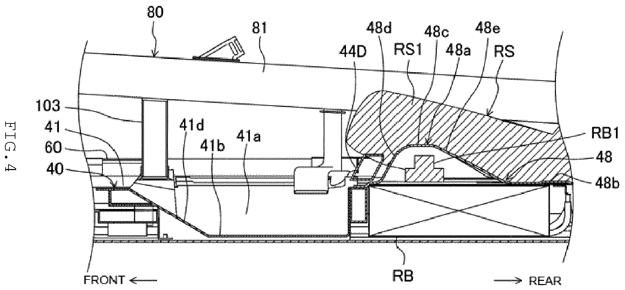

FIG. 4 is a longitudinal cross-sectional view of a rear row and the vicinity thereof.

### [Mode for Carrying Out the Invention]

An embodiment of the present invention will be described below in detail with reference to the accompanying drawings. The following description of the preferable embodiment is merely exemplary in essence and not intended to limit the present invention, its application, nor its usage.

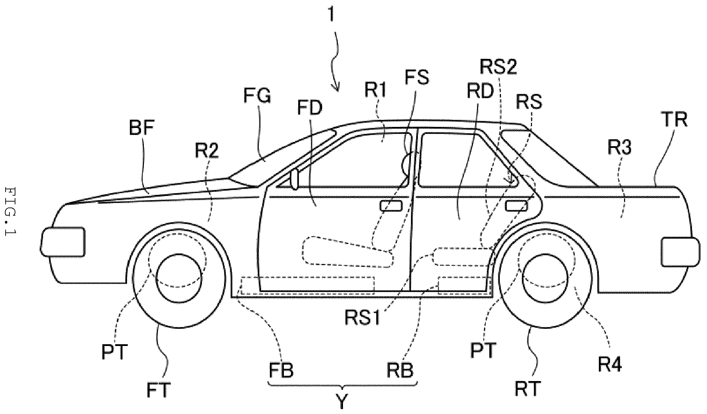

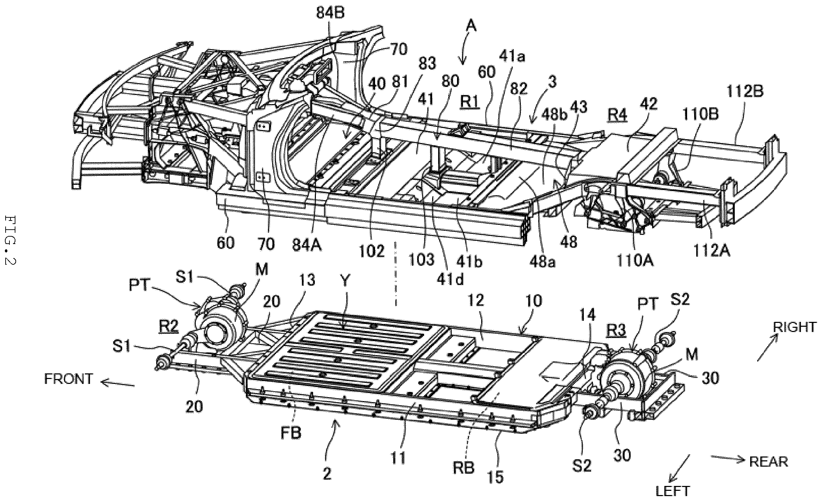

FIG. 1 is a side view of an automobile 1 including a vehicle-body structure A (illustrated in FIG. 2) according to the embodiment of the present invention when viewed from left. In description of the embodiment, a vehicle front-rear direction is simply referred to as a "front-rear direction", a vehicle front side is simply referred to as a "front side", and a vehicle "rear side" is simply referred to as a "rear side". In addition, a vehicle width direction is the right-left direction of the vehicle, a vehicle left side is simply referred to as a "left side", and a vehicle right side is simply referred to as a "right side".

### (Entire structure of automobile)

The automobile 1 is a passenger automobile, and an occupant space R1 in which a passenger boards is provided at a front-rear direction intermediate portion of the automobile 1. The occupant space R1 includes front seats (front-row seats) FS included in a front row, and rear seats (rear-row seats) RS included in a rear row. The front seats FS include a driver seat arranged on the right side (or the left side) in the occupant space R1, and a front passenger seat arranged on the left side (or the right side) in the occupant space R1. The rear seats RS are arranged on the right and left sides, respectively, in the occupant space R1.

Each rear seat RS includes a seat cushion RS1 and a seat back RS2. The seat cushion RS1 is a member that constitutes a passenger seating surface and is placed and fixed on a rear-seat placement panel (seat pan) 48 to be described later. The seat back RS2 is a member that supports the waist to the back of the passenger and is installed extending upward from a rear portion of the seat cushion RS1. The seat cushion RS1 and the seat back RS2 may be integrated in such a structure that angle adjustment of the seat back RS2 is impossible, or the seat cushion RS1 and the seat back RS2 may be separated in such a structure that angle adjustment of the seat back RS2 is possible. The seat cushion RS1 may be continuous from the left side to the right side in the occupant space R1 or may be independent between the left side and the right side in the occupant space R1. In the present embodiment, the seat cushion RS1 is independent between the right and left sides because a center frame 80 to be described later is provided, but when a member such as the center frame 80 is not provided, it is possible to use the seat cushion RS1 that is continuous in the right-left direction. Although not illustrated, the automobile 1 is provided with front seat belts for fastening passengers sitting on the front seats FS at collision and rear seat belts for fastening passengers sitting on the rear seats RS at collision.

Non-illustrated third-row seats may be arranged on the rear side of the rear seats RS. A front door FD and a rear door RD are disposed on each of the left and right sides of the occupant space R1.

A front-side space R2 is provided on the front side of the occupant space R1 in the automobile 1. A powertrain PT can be mounted in the front-side space R2 as necessary. When the powertrain PT is mounted in the front-side space R2, the front-side space R2 may be called, for example, a powertrain storage room, a motor room, or an engine room. A bonnet hood BF is provided at an upper portion of the front-side space R2.

As illustrated in FIG. 1, a trunk space R3 in which a package or the like can be housed is provided on the rear side of the occupant space R1 of the automobile 1. The trunk space R3 can be opened and closed by a trunk lid TR. A rear-side space R4 is provided on the rear side of the occupant space R1 and at a position lower than the trunk space R3 in the automobile 1. The powertrain PT that generates power for the automobile 1 can be mounted in the rear-side space R4 as necessary. When the powertrain PT is mounted in the rear-side space R4, the rear-side space R4 may be called, for example, a powertrain storage room, a motor room, or an engine room.

The powertrain PT may be mounted in each of the front-side space R2 and the rear-side space R4 or the powertrain PT may be mounted in one of them. A front-wheel-drive vehicle in which only front wheels FT are driven by the powertrain PT is achieved when the powertrain PT is mounted only in the front-side space R2, or a rear-wheel-drive vehicle in which only rear wheels RT are driven by the powertrain PT is achieved when the powertrain PT is mounted only in the rear-side space R4. Alternatively, a four-wheel-drive vehicle is achieved when the front wheels FT and the rear wheels RT are driven by the powertrains PT mounted in both the front-side space R2 and the rear-side space R4.

Each powertrain PT includes at least a traveling motor M (illustrated in FIG. 2) for driving a drive wheel and also includes a speed reducer, a transmission, or the like as necessary. Thus, the automobile 1 is an electric vehicle. The traveling motor M is disposed such that the rotation center thereof extends in the right-left direction. The powertrain PT may include, for example, a controller in addition to the traveling motor M. The powertrain PT may include an internal combustion engine. A battery unit Y (also illustrated in FIG. 1) for supplying electric power to the traveling motor M is mounted at a lower portion of the automobile 1. For example, the battery unit Y may be charged by using power generated by the internal combustion engine, and either the front wheels FT or the rear wheels RT or both may be driven by power generated by the internal combustion engine.

The type of the automobile 1 does not necessarily need to be a four-door vehicle as exemplarily illustrated in FIG. 1 and may be, for example, an automobile including no rear doors RD. Although not illustrated, the present invention is also applicable to an automobile, such as a hatchback vehicle, in which the rear-side space R4 can be opened and closed by a tail gate.

As illustrated in FIG. 2, the automobile 1 includes a lower-portion structural body 2 and an upper-portion structural body 3, and the vehicle-body structure A is constituted by a front portion of the lower-portion structural body 2 and a front portion of the upper-portion structural body 3. FIG. 2 illustrates a state in which the doors FD and RD, the bonnet hood BF, a fender, window glasses, a roof, a center pillar, a rear pillar, the front bumper, a rear bumper, front and rear lighting devices including headlights, an instrument panel, the front and rear seats, and the like, which are included in the upper-portion structural body 3 in reality, are removed. FIG. 2 also illustrates a state in which the front wheels FT, the rear wheels RT, a suspension device, and the like, which are included in the lower-portion structural body 2 in reality, are removed.

The lower-portion structural body 2 includes the battery unit Y. The battery unit Y includes a front-side battery FB, a rear-side battery RB, and a rack frame 10 surrounding the front-side battery FB and the rear-side battery RB. The lower-portion structural body 2 also includes a front support frame 20 extending from a front portion of the rack frame 10 toward the front side, and a rear support frame 30 extending from a rear portion of the rack frame 10 toward the rear side.

Although not illustrated, in a typical electric automobile, a battery unit is often detachably attached as a separated body from a vehicle body under a floor, but in the present embodiment, not only the batteries FB and RB but also the front support frame 20 and the rear support frame 30 are integrated with the rack frame 10 surrounding the batteries FB and RB, and the front support frame 20 and the rear support frame 30 are detachably attached to the upper-portion structural body 3 together with the batteries FB and RB.

Specifically, the automobile 1 of the present embodiment is configured to be able to be divided in the up-down direction into the lower-portion structural body 2 including the batteries FB and RB, and the upper-portion structural body 3 in which the occupant space R1 and the trunk space R3 are formed. Being able to be divided in the up-down direction means integration of the lower-portion structural body 2 with the upper-portion structural body 3 by using fastening members such as bolts and nuts, screws, and the like without using welding, bonding, and the like. Accordingly, the lower-portion structural body 2 can be separated from the upper-portion structural body 3 as necessary when maintenance and repair are performed after the automobile 1 is handed over to a user, and thus maintainability is excellent.

A vehicle-body structure of a ladder frame type is known as the vehicle-body structure of an automobile. In a case of the vehicle-body structure of the ladder frame type, division into a ladder frame and a cabin in the up-down direction is possible, but the ladder frame continuously extends in the front-rear direction and thus mainly receives a collision load at front collision and rear collision. At side collision, the ladder frame only supplementarily receives a collision load, and the collision load is mainly received by the cabin. In this manner, in the vehicle-body structure of the ladder frame type, it is normal that a member that receives a collision load is different between front or rear collision and side collision.

However, in a case of the automobile 1 of the present embodiment, the lower-portion structural body 2, which includes the front support frame 20 and the rear support frame 30, and the upper-portion structural body 3 can be divided from each other, but its technical idea is largely different from that of the conventional vehicle-body structure of the ladder frame type in that a collision load is received by the lower-portion structural body 2 and the upper-portion structural body 3 in both cases of front or rear collision and side collision and thus the collision load can be dispersed to and absorbed by the structural bodies 2 and 3. Hereinafter, the structures of the lower-portion structural body 2 and the upper-portion structural body 3 will be sequentially described. Note that an example in which division into the lower-portion structural body 2 and the upper-portion structural body 3 is possible will be described below in the present embodiment, but the present invention is not only applied to a vehicle-body structure in which such division is possible, but is also applicable to a vehicle-body structure that cannot be divided into the lower-portion structural body 2 and the upper-portion structural body 3.

### (Lower-portion structural body)

First, the lower-portion structural body 2 will be described below. The lower-portion structural body 2 includes the powertrain PT, the front wheels FT, the rear wheels RT, front-side suspension devices (not illustrated), and rear-side suspension devices in addition to the batteries FB and RB, the rack frame 10, the front support frame 20, and the rear support frame 30.

As illustrated in FIG. 2, the rack frame 10 as a framework of the battery unit Y is formed in such a large size that, on the lower side of an occupant-space-side floor panel 41 to be described later, the rack frame 10 extends from the vicinity of a left end portion of the occupant-space-side floor panel 41 to the vicinity of a right end portion thereof and extends from the vicinity of a front end portion of the occupant-space-side floor panel 41 to the vicinity of a rear end portion thereof. In this manner, since the rack frame 10 is provided in a large part of a region on the lower side of the occupant-space-side floor panel 41, the batteries FB and RB having large capacities can be mounted on the automobile 1. The batteries FB and RB may be, for example, lithium-ion batteries or all-solid-state batteries or may be any other secondary batteries. Alternatively, the batteries FB and RB may be what is called battery cells or may be battery packs in which a plurality of battery cells are housed.

The rack frame 10 includes a left-side member 11, a right-side member 12, a front-side member 13, and a rear-side member 14. The left-side member 11, the right-side member 12, the front-side member 13, and the rear-side member 14 are formed of, for example, an extruded material made of an aluminum alloy, but may be formed of a press-formed material such as an aluminum alloy plate material or a steel plate.

A cross-sectional shape of each of the left-side member 11, the right-side member 12, the front-side member 13, and the rear-side member 14 in a direction orthogonal to its longitudinal direction is a rectangular shape. The left-side member 11, the right-side member 12, the front-side member 13, and the rear-side member 14 are all arranged at the same height and substantially horizontally extend. The front-side member 13 extends in the vehicle width direction at a front portion of the battery unit Y.

When the lower-portion structural body 2 is to be connected to the upper-portion structural body 3, the front-side member 13 is fastened and fixed to a lower portion of a dash panel 50 by a fastening member, and the left-side member 11 and the right-side member 12 are fastened and fixed to right and left side sills 60, respectively, by fastening members. The rear-side member 14 is fastened and fixed to a connection panel 43, which will be described later, by a fastening member.

The left-side member 11 is provided at a left end portion of the lower-portion structural body 2 and extends in the front-rear direction. The right-side member 12 is provided at a right end portion of the lower-portion structural body 2 and extends in the front-rear direction. The left-side member 11 and the right-side member 12 are arranged on a vehicle-width-direction inner side of the right and left side sills 60, respectively, to be described later. The front-side member 13 extends from a front end portion of the left-side member 11 to a front end portion of the right-side member 12. A left end portion of the front-side member 13 and the front end portion of the left-side member 11 are connected to each other, and a right end portion of the front-side member 13 and the front end portion of the right-side member 12 are connected to each other. The rear-side member 14 is provided at a rear portion of the battery unit Y and extends in the right-left direction from a rear end portion of the left-side member 11 to a rear end portion of the right-side member 12. A left end portion of the rear-side member 14 and the rear end portion of the left-side member 11 are connected to each other, and a right end portion of the rear-side member 14 and the rear end portion of the right-side member 12 are connected to each other.

A cover member 15 is attached to a lower portion of the rack frame 10. The cover member 15 is fixed to lower surfaces of the left-side member 11, the right-side member 12, the front-side member 13, and the rear-side member 14 and also fixed to the side sills 60. Note that an upper portion of the rack frame 10 may be blocked by a non-illustrated lid or may be blocked by the occupant-space-side floor panel 41 to be described later. Electric power of the batteries FB and RB housed in the rack frame 10 is supplied to the traveling motor M through a non-illustrated traveling control circuit. The batteries FB and RB can be charged through a non-illustrated charging socket.

As illustrated in FIG. 2, a pair of right and left front support frames 20 are provided. The left-side front support frame 20 is connected to a site on the left side of a right-left direction center of the front-side member 13 constituting the front portion of the rack frame 10. The right-side front support frame 20 is connected to a site on the right side of the right-left direction center of the front-side member 13.

The front-side powertrain PT is attached to each front support frame 20 through a non-illustrated mounting member. In the lower-portion structural body 2, drive shafts S1 through which output from the powertrain PT (rotational force of the traveling motor M) is transferred to the right and left front wheels FT, respectively, are provided on the right and left sides.

As illustrated in FIG. 2, similarly to the front support frames 20, a pair of right and left rear support frames 30 are provided and substantially horizontally extend in straight lines toward the rear side. The left-side rear support frame 30 is connected to a site on the left side of a right-left direction center of the rear-side member 14 constituting the rear portion of the rack frame 10. The right-side rear support frame 30 is connected to a site on the right side of the right-left direction center of the rear-side member 14.

The rear-side powertrain PT is attached to each rear support frame 30 through a non-illustrated mounting member. In the lower-portion structural body 2, drive shafts S2 through which output from the powertrain PT (rotational force of the traveling motor M) is transferred to the right and left rear wheels, respectively, are provided on the right and left sides.

### (Upper-portion structural body)

Subsequently, the upper-portion structural body 3 will be described below. The upper-portion structural body 3 includes a floor member 40, the dash panel 50, and the pair of right and left side sills 60. The floor member 40 is a member arranged at a higher position than the rack frame 10 and the rear support frames 30 of the lower-portion structural body 2. The floor member 40 includes the occupant-space-side floor panel 41 constituting a floor of the occupant space R1 including the front seats FS and the rear seats RS (illustrated in FIG. 1) on which passengers sits, a trunk-space-side floor panel 42 constituting a floor of the trunk space R3, and the connection panel 43 connecting a rear portion of the occupant-space-side floor panel 41 and a front portion of the trunk-space-side floor panel 42. A kick-up portion is constituted by the connection panel 43.

The floor member 40 may be formed of, for example, a member shaped by pressing a steel plate or the like. The occupant-space-side floor panel 41, the trunk-space-side floor panel 42, and the connection panel 43 may be integrally formed or may be formed by separately forming components and then connecting them. In the present embodiment, description is made with the three divided portions of the occupant-space-side floor panel 41, the trunk-space-side floor panel 42, and the connection panel 43, but the floor member 40 including the panels 41 to 43 may be referred to as a floor panel. Alternatively, only the occupant-space-side floor panel 41 may be referred to as a floor panel.

The occupant-space-side floor panel 41 extends from a front portion of the occupant space R1 to a rear portion thereof and from a left-side portion of the occupant space R1 to a right-side portion thereof. The occupant-space-side floor panel 41 according to the present embodiment has a floor tunnel-less structure including no tunnel portion but may include a tunnel portion.

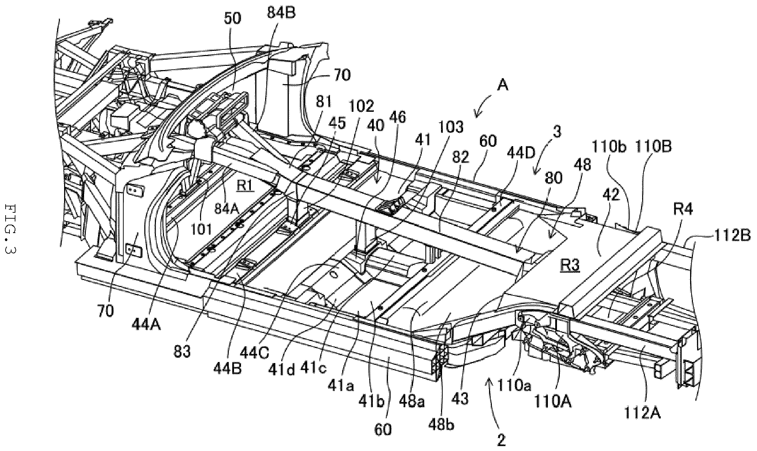

As illustrated in FIG. 3, the rear-seat placement panel 48 on which the seat cushion RS1 of each rear seat RS is placed is formed at a rear-side part of the occupant-space-side floor panel 41. The rear-seat placement panel 48 may be continuously formed from the left side of the occupant-space-side floor panel 41 to the right side thereof or may be formed only on the left and right sides of the occupant-space-side floor panel 41 but not at a right-left direction center portion, but the rear-seat placement panel 48 is formed at least directly below a part at which a passenger sits on the seat cushion RS1. The rear-seat placement panel 48 may be formed as a member separated from a body part of the occupant-space-side floor panel 41 or may be integrally shaped with the occupant-space-side floor panel 41. The rear-side battery RB is arranged below the rear-seat placement panel 48.

A bulging portion 48a that bulges farther on the upper side than a rear-side part of the rear-seat placement panel 48 is formed at a front-side part of the rear-seat placement panel 48. The bulging portion 48a may be continuous in the right-left direction from the left side of the rear-seat placement panel 48 to the right side thereof or may be formed only on the left and right sides of the rear-seat placement panel 48. The bulging portion 48a may be provided only directly below the part at which a passenger sits on the seat cushion RS1.

The dimension of the bulging portion 48a in front-rear direction is set such that the bulging portion 48a is longer on the lower side than on the upper side. Specifically, the dimension of the bulging portion 48a in front-rear direction is shorter at a position farther on the upper side at the bulging portion 48a, and the dimension of a top portion 48c of the bulging portion 48a in the front-rear direction is 1/2 or less of the dimension of a lower end portion of the bulging portion 48a in the front-rear direction. A front wall portion 48d of the bulging portion 48a is tilted or curved such that the front wall portion 48d is positioned farther on the rear side at a position farther on the upper side. A back wall portion 48e of the bulging portion 48a is tilted or curved such that the back wall portion 48e is positioned farther on the front side at a position farther on the upper side. The tilt angle of the back wall portion 48e with respect to the horizontal plane is set to be smaller than the tilt angle of the front wall portion 48d with respect to the horizontal plane, and accordingly, the back wall portion 48e is tilted more gently than the front wall portion 48d. Note that the front wall portion 48d and the back wall portion 48e may have the same tilt angle or the front wall portion 48d may be tilted more gently than the back wall portion 48e.

Part of the rear-seat placement panel 48 on the rear side of the bulging portion 48a is constituted as a flat portion 48b that is formed substantially flat. The flat portion 48b continuously extends in the right-left direction from the left side of the rear-seat placement panel 48 to the right side thereof and also extends in the front-rear direction.

The seat cushion RS1 is disposed from the front side of the bulging portion 48a to a rear portion of the flat portion 48b. It is set such that the hips of a passenger at a legitimate seating position are positioned on the rear side of a highest part of the bulging portion 48a. In other words, the formation position of the bulging portion 48a, the shape of the seat cushion RS1, the dimension of the seat cushion RS1 in the front-rear direction, and the like are set such that the hip point of a passenger at the legitimate seating position is positioned on the rear side of the highest part of the bulging portion 48a.

Accordingly, the highest part of the bulging portion 48a is positioned on the front side of the hips of a passenger sitting on the rear seat RS, and thus it is possible to prevent a phenomenon (submarine phenomenon) that, for example, when the passenger is relatively moved to the front side by inertial force at front collision, the passenger moves downward and leaves out of below the rear seat belt (not illustrated). In other words, the vehicle-body structure A including an antisubmarine structure can be obtained by providing the bulging portion 48a at the above-described predetermined position.

A recessed portion 41a that bulges downward is formed on the front side of the rear-seat placement panel 48 at the occupant-space-side floor panel 41. The recessed portion 41a has a bottom surface 41b on which the feet of a rear-seat passenger sitting on the seat cushion RS1 of the rear seat RS can be placed. The bottom surface 41b is substantially horizontally formed and positioned lower than an upper end portion of the rear-side battery RB. The recessed portion 41a may be continuously formed from a left-side portion of the occupant-space-side floor panel 41 to a right-side portion thereof.

A tilted portion 41d that is tilted such that the tilted portion 41d is positioned farther on the upper side at a position farther on the front side and on which the feet of a passenger sitting on the seat cushion RS1 can be placed is formed on the front side of the bottom surface 41b at the occupant-space-side floor panel 41. In particular, the antisubmarine effect can be further increased when the feet of the passenger are placed on the tilted portion 41d.

An accessory member RB1 is housed inside the bulging portion 48a. Specifically, the accessory member RB1 constituted by a control unit such as a contactor is disposed at a front-side part of the upper surface of the rear-side battery RB. The accessory member RB1 may be an accessory member other than a contactor. The accessory member RB1 may include, for example, a harness (not illustrated) or a bracket (not illustrated).

The accessory member RB1 is not disposed at a rear-side part of the upper surface of the rear-side battery RB, in other words, a part corresponding to the flat portion 48b of the rear-seat placement panel 48 but is disposed at a part corresponding to the bulging portion 48a. An upper end portion of the accessory member RB1 is positioned higher than the flat portion 48b, in other words, higher than a lower end portion of the bulging portion 48a, and when such a relatively high accessory member RB1 is housed in the bulging portion 48a, it is possible to achieve such a layout of the accessory member RB1 that the flat portion 48b is lowered to lower the hip point of a passenger and an antisubmarine space in the bulging portion 48a is effectively utilized. The battery may be housed in the bulging portion 48a.

The dimension of the accessory member RB1 in the front-rear direction is set such that the accessory member RB1 is longer on the lower side than on the upper side. Accordingly, the dimension of the accessory member RB1 in the front-rear direction can be set in accordance with the shape of a longitudinal cross-section of the bulging portion 48a, and thus a wasted space is unlikely to be generated inside the bulging portion 48a, which leads to further floor-height lowering. The dimension of the accessory member RB1 in the front-rear direction may be constant from the upper side to the lower side. Alternatively, a plurality of accessory members RB1 may be stacked in the up-down direction and installed or may be arranged in the right-left direction and installed.

The trunk-space-side floor panel 42 is positioned higher than the occupant-space-side floor panel 41. The rear-side space R4 is positioned lower than the trunk-space-side floor panel 42. Since the trunk-space-side floor panel 42 is arranged at a higher position than the occupant-space-side floor panel 41, the connection panel 43 extends in the up-down direction.

As illustrated in FIG. 3 as well, the dash panel 50 is a member as a partition wall between the front-side space R2 and the occupant space R1 and extends upward from a front portion of the occupant-space-side floor panel 41 and in the right-left direction as well, thereby partitioning the front portion of the occupant space R1.

As illustrated in FIG. 2, the right and left side sills 60 are disposed extending in the front-rear direction at right and left end portions, respectively, of the occupant-space-side floor panel 41. The left end portion of the occupant-space-side floor panel 41 is connected to an up-down direction intermediate portion of the left side sill 60, an upper part of the side sill 60 protrudes upward from a connection site of the occupant-space-side floor panel 41, and a lower part of the side sill 60 protrudes downward from the connection site of the occupant-space-side floor panel 41. Since the battery unit Y including the batteries FB and RB is disposed at a lower position than the occupant-space-side floor panel 41, such arrangement is made that the lower part of the side sill 60 overlaps with the batteries FB and RB in a vehicle side view. Similarly, the right side sill 60 is connected to the right end portion of the occupant-space-side floor panel 41.

The upper-portion structural body 3 includes a pair of right and left hinge pillars 70. The right hinge pillar 70 extends upward from a front end portion of the right side sill 60. The left hinge pillar 70 extends upward from a front end portion of the left side sill 60. The right and left front doors FD (illustrated in FIG. 1) are rotatably attached to the right and left hinge pillars 70, respectively. A left edge portion of the dash panel 50 is connected to a right-side surface of the left hinge pillar 70. A right edge portion of the dash panel 50 is connected to a left-side surface of the right hinge pillar 70. Note that, although not illustrated, the upper-portion structural body 3 is also provided with a center pillar, a rear pillar, and the like.

The upper-portion structural body 3 includes a left-side rear-side frame 112A extending in the front-rear direction on the left side on the rear side of the rear portion of the occupant-space-side floor panel 41, and a right-side rear-side frame 112B extending in the front-rear direction on the right side on the rear side of the rear portion of the occupant-space-side floor panel 41.

A left-side rear-wheel suspension support member 110A that supports a rear suspension device (not illustrated) is provided on the left side on the rear side of the connection panel 43 in the upper-portion structural body 3. A right-side rear-wheel suspension support member 110B that supports a rear suspension device (not illustrated) is provided on the right side on the rear side of the connection panel 43 in the upper-portion structural body 3.

As illustrated in FIG. 3, the occupant-space-side floor panel 41 includes a front-portion cross member 44A, an intermediate cross member 44B, a recessed-portion front-side cross member 44C, and a recessed-portion rear-side cross member 44D. The front-portion cross member 44A, the intermediate cross member 44B, the recessed-portion front-side cross member 44C, and the recessed-portion rear-side cross member 44D extend in the right-left direction and are fixed to the upper surface of the occupant-space-side floor panel 41.

The front-portion cross member 44A is disposed at the front portion of the occupant-space-side floor panel 41. A front portion of the front-portion cross member 44A is also joined to the lower portion of the dash panel 50. The intermediate cross member 44B is disposed on the rear side of the front-portion cross member 44A and on the front side of the recessed portion 41a.

The recessed-portion front-side cross member 44C is disposed extending in the right-left direction along the front portion of the recessed portion 41a on the rear side of the intermediate cross member 44B. The recessed-portion rear-side cross member 44D is disposed extending in the right-left direction along a rear portion of the recessed portion 41a on the rear side of the recessed-portion front-side cross member 44C. A closed cross-section is constituted by the recessed-portion front-side cross member 44C and the occupant-space-side floor panel 41, and a closed cross-section is constituted by the recessed-portion rear-side cross member 44D and the occupant-space-side floor panel 41. Since the recessed-portion front-side cross member 44C and the recessed-portion rear-side cross member 44D are provided, the part at which the recessed portion 41a is formed is reinforced. A front portion of the floor frame 41c provided inside the recessed portion 41a is connected to a right-left direction central portion of the recessed-portion front-side cross member 44C, and a rear portion of the floor frame 41c is connected to a right-left direction central portion of the recessed-portion rear-side cross member 44D.

As illustrated in, for example, FIG. 2, the upper-portion structural body 3 includes the center frame 80 continuously extending in the front-rear direction from the dash panel 50 to the connection panel 43. The center frame 80 is positioned at a right-left direction central portion, and a rear portion of the center frame 80 is connected to the connection panel 43. The left-side front seat FS and a rear seat RS are disposed on the left side of the center frame 80, and the right-side front seat FS and a rear seat RS are disposed on the right side of the center frame 80.

The center frame 80 includes a front-side frame member 81 extending in the front-rear direction, a rear-side frame member 82 disposed on the vehicle rear side of the front-side frame member 81 and extending toward the rear side, and a connection member 83 connecting a rear portion of the front-side frame member 81 and a front portion of the rear-side frame member 82. The front-side frame member 81 and the rear-side frame member 82 have hollow shapes, in other words, tubular shapes extending in the front-rear direction and may be formed of, for example, an extruded material. Note that the center frame 80 is not limited to the two-division structure of the front-side frame member 81 and the rear-side frame member 82 but may be formed as one member or may have a three-division structure. When the center frame 80 is formed as one member, the connection member 83 may be omitted.

As illustrated in FIG. 3, the center frame 80 also includes a left-side frame member 84A and a right-side frame member 84B constituting the front portion of the center frame 80. A rear portion of the left-side frame member 84A is fixed to a left-side surface of a front-rear direction intermediate portion of the front-side frame member 81. A front portion of the left-side frame member 84A is connected to a part of the dash panel 50 higher than and away from the occupant-space-side floor panel 41.

A rear portion of the right-side frame member 84B is fixed to a right-side surface of the front-rear direction intermediate portion of the front-side frame member 81. A front portion of the right-side frame member 84B is connected to the part of the dash panel 50 higher than and away from the occupant-space-side floor panel 41. The upper-portion structural body 3 includes a first fixation member 101, a second fixation member 102, and a third fixation member 103 that fix the center frame 80 to the occupant-space-side floor panel 41. A lower portion of the third fixation member 103 is connected to the right-left-direction central portion of the recessed-portion front-side cross member 44C.

### (Working effects of embodiment)

As described above, according to the present embodiment, the rear-side battery RB can be arranged below the rear-seat placement panel 48, and thus a sufficient number of mounted batteries can be maintained. Moreover, since the bulging portion 48a of the rear-seat placement panel 48 is formed at the front-side part of the rear-seat placement panel 48, a passenger is unlikely to move obliquely downward toward the front side at front collision, and the submarine phenomenon is prevented. In addition, since the upper end portion of the accessory member RB1 housed in the bulging portion 48a is positioned farther on the upper side than the lower end portion of the bulging portion 48a, the inside of the bulging portion 48a can be effectively utilized as a housing space for the accessory member RB1, thereby achieving vehicle floor-height lowering.

The above-described embodiment is merely exemplary in any aspects and not to be interpreted in a restrictive manner. Furthermore, modifications and changes belonging to a scope equivalent to the claims are all included in the scope of the present invention.

### [Industrial Applicability]

As described above, the present invention is applicable as, for example, a vehicle-body structure of an electric vehicle.

### [Reference Signs List]

- 1: automobile
- 41: occupant-space-side floor panel
- 41a: recessed portion
- 41b: bottom surface
- 41d: tilted portion
- 48: rear-seat placement panel (seat pan)
- 48a: bulging portion
- RB: rear-side battery
- RB1: accessory member

## Claims

1. A vehicle-body structure of an automobile, the vehicle-body structure comprising:
a seat pan (48) that is formed at a part of a floor panel (41) and on which a seat cushion (RS1) is placed; and
a battery (RB) arranged below the seat pan (48), wherein
a bulging portion (48a) that bulges farther on an upper side than at a vehicle rear side of the seat pan (48) is formed at a vehicle front side of the seat pan (48),
an accessory member (RB1) is housed inside the bulging portion (48a), and
an upper end portion of the accessory member (RB1) housed in the bulging portion (48a) is positioned farther on the upper side than a lower end portion of the bulging portion (48a).

2. The vehicle-body structure according to claim 1, wherein
a recessed portion (41a) having a bottom surface (41b) on which feet of a passenger sitting on the seat cushion (RS1) can be placed is formed on the vehicle front side of the seat pan (48) at the floor panel (41), and
the bottom surface (41b) is positioned farther on a lower side than an upper end portion of the battery (RB).

3. The vehicle-body structure according to claim 2, wherein
a tilted portion (41d) that is tilted such that the tilted portion (41d) is positioned farther on the upper side at a position farther on a vehicle front side and on which the feet of the passenger sitting on the seat cushion (RS1) can be placed is formed on a vehicle front side of the bottom surface (41b).

4. The vehicle-body structure according to any one of claims 1 to 3, wherein
a dimension of the bulging portion (48a) in a vehicle front-rear direction is set such that the bulging portion (48a) is longer on a lower side than on an upper side, and
a dimension of the accessory member (RB1) in the vehicle front-rear direction is set such that the accessory member (RB1) is longer on the lower side than on the upper side.

5. The vehicle-body structure according to any one of claims 1 to 4, wherein
the bulging portion (48a) is continuously formed in a vehicle width direction.

6. The vehicle-body structure according to any one of claims 1 to 5, wherein
the seat pan (48) is for rear seat placement, the seat cushion (RS1) is one for the rear seat, and the battery (RB) is a rear side battery, where the vehicle-body structure preferably comprises a front side battery (FB) in addition.

7. The vehicle-body structure according to any one of claims 1 to 6, wherein
a rack frame (10) as a framework of the battery (RB) is formed on the lower side of the floor panel (41) such that the rack frame (10) extends from the vicinity of a left end portion to the vicinity of a right end portion of the floor panel (41).

8. The vehicle-body structure according to any one of claims 1 to 7, wherein
right and left side sills (60) are disposed extending in a front-rear direction at right and left end portions, respectively, of the floor panel (41),
wherein the left and right end portions of the floor panel (41), respectively, are connected to an up-down direction intermediate portion of the left and right side sills (60), respectively,
wherein upper parts of the side sills (60) protrude upward from the connection sites with the floor panel (41), and
wherein lower parts of the side sills (60) protrude downward from the connection sites with the floor panel (41) .

9. The vehicle-body structure according to any one of claims 1 to 8, wherein
the floor panel (41) includes a recessed-portion front-side cross member (44C) disposed along the front portion of the recessed portion (41a), and a recessed-portion rearside cross member (44D) along the rear portion of the recessed portion (41a), both of which extend in the right-left direction and are fixed to the upper surface of the floor panel (41).

10. A vehicle comprising the vehicle-body structure according to any one of claims 1 to 9.
